# EUROPÄISCHE PATENTSCHRIFT

(11) **EP 2 650 551 B1**
(45) Veröffentlichungstag und Bekanntmachung des Hinweises auf die Patenterteilung: **13.03.2024**
(21) Anmeldenummer: 13163472.7
(22) Anmeldetag: 12.04.2013
(51) Int. Cl.: F16C 33/78, F16J 15/3212, F16C 33/58

(54) **WÄLZLAGERVORRICHTUNG MIT WENIGSTENS EINER DICHTUNGSEINHEIT**
ROLLING BEARING DEVICE WITH AT LEAST ONE SEALING UNIT
DISPOSITIF À ROULEMENT COMPRENANT AU MOINS UNE UNITÉ D'ÉTANCHÉITÉ

(30) Priorität: 12.04.2012 DE 102012205986
(43) Veröffentlichungstag der Anmeldung: 16.10.2013
(73) Patentinhaber: Aktiebolaget SKF, 415 50 Göteborg (SE)
(72) Erfinder: Tanke, Jesko-Henning, 97422 Schweinfurt (DE); Swete, Wolfgang, 8720 Knittelfeld (AT); Kogler, Christian, 8761 Oberkurzheim (AT)
(74) Vertreter: Schonecke, Mitja

(56) Entgegenhaltungen:
- EP-A2- 1 016 811
- WO-A1-02/38428
- WO-A1-2012/136632
- DE-A1-102007 049 087
- DE-U- 6 924 791
- JP-A- 2007 192 258
- JP-U- S5 886 921
- US-A- 3 856 368
- US-A- 4 799 808
- US-A- 5 129 744
- US-A- 5 839 834

## Beschreibung

Die Erfindung geht aus von einer Wälzlagervorrichtung nach dem Oberbegriff des Anspruchs 1.

Es ist eine Wälzlagervorrichtung, mit wenigstens einer Dichtungseinheit und zumindest einer Innenringeinheit, welche wenigstens eine Fläche aufweist, an welcher wenigstens ein Teil der Dichtungseinheit in zumindest einem Betriebszustand gleitet, bekannt.

US 5,129,744 betrifft eine gattungsgemäße Wälzlagervorrichtung und lehrt eine Dichtung für ein Walzenzapfenlager mit zwei ineinander verzahnten Komponenten. Sie besteht aus einem rotierenden Bauteil, das an die innere Schale des Lagers angepasst ist und einer stationären Komponente, die an die äußere Schale des Lagers angepasst ist.

DE 10 2007 049 087 A1 lehrt ein zweireihiges Kegelrollenlager, bestehend aus mindestens drei Lagerringen, insbesondere einem Nasenring, einem Tragring und einem Haltering.

EP1 016 811 A2 lehrt eine Dichtungsvorrichtung zum Abdichten eines schlitzförmigen Raumes zwischen zwei sich radial erstreckenden Flächen, die um eine Welle angeordnet sind, und relativ zueinander axial verschiebbar sind entlang dieser Welle.

Die Aufgabe der Erfindung besteht insbesondere darin, eine gattungsgemäßen Wälzlagervorrichtung mit einer hohen Effizienz bereitzustellen. Die Aufgabe wird erfindungsgemäß durch die Merkmale des Patentanspruchs 1 gelöst, während vorteilhafte Ausgestaltungen und Weiterbildungen der Erfindung den Unteransprüchen entnommen werden können.

Die Erfindung geht aus von einer Wälzlagervorrichtung mit wenigstens einer Dichtungseinheit und zumindest einer Innenringeinheit, welche wenigstens eine Fläche aufweist, an welcher wenigstens ein Teil der Dichtungseinheit in zumindest einem Betriebszustand gleitet.

Es wird vorgeschlagen, dass die Innenringeinheit wenigstens eine Erhebung mit einem Bereich aufweist, welcher einen größeren Abstand von einer Drehachse der Wälzlagervorrichtung aufweist als die Fläche. Unter einer "Innenringeinheit" soll insbesondere eine Einheit verstanden werden, welche wenigstens einen Innenring aufweist und welche wenigstens ein weiteres Bauteil aufweisen kann, welches an dem Innenring befestigt ist, wobei das Bauteil insbesondere einstückig mit dem Innenring ausgebildet sein kann. Unter einer "Drehachse" der Wälzlagervorrichtung soll insbesondere eine Achse verstanden werden, um welche sich bei einer Relativbewegung des Innenrings und eines Außenrings der Wälzlagervorrichtung wenigstens der Innenring oder der Außenring dreht. Mit einer erfindungsgemäßen Ausgestaltung kann eine hohe Effizienz erreicht werden. Insbesondere kann eine effiziente und lange anhaltende Abdichtung erreicht werden. Insbesondere kann es Schmiermittel der Wälzlagervorrichtung erschwert werden, zu der Fläche zu gelangen.

Ferner wird erfindungsgemäß vorgeschlagen, dass die Wälzlagervorrichtung wenigstens ein Federelement aufweist, welches den Teil der Dichtungseinheit auf die Fläche drückt, und der Bereich einen Abstand von der Drehachse aufweist, der größer oder gleich groß ist wie der Abstand des Federelements von der Drehachse. Hierdurch kann erreicht werden, dass Schmierstoff der Wälzlagervorrichtung, der von einem Innenraum zu der Dichtungseinheit strömt, den Teil der Dichtungseinheit auf die Fläche drückt.

Erfindungsgemäß weist die Wälzlagervorrichtung wenigstens eine Außenringeinheit auf, die einen Dichtungsträger und ein Halteblech umfasst, wobei der Dichtungsträger wenigstens einen Spalt mit der Erhebung der Innenringeinheit bildet, und wobei eine maximale radiale Erstreckungslänge des Spalts höchstens so groß, vorzugsweise höchstens drei Viertel so groß, vorzugsweise höchstens halb so groß, ist wie eine maximale Erstreckungslänge des Federelements in einem Querschnitt in einem entspannten Zustand.

Weitere Vorteile ergeben sich aus der folgenden Zeichnungsbeschreibung. In den Zeichnungen sind Ausführungsbeispiele der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.
Fig. 1 zeigt einen Teilschnitt durch einen Teil einer erfindungsgemäßen Wälzlagervorrichtung,
Fig. 2 zeigt einen Teilschnitt durch einen Teil einer alternativen Ausführungsform einer erfindungsgemäßen Wälzlagervorrichtung,
Fig. 2a zeigt einen Ausschnitt aus Fig. 2,
Fig. 3 zeigt einen Schnitt durch eine alternative Ausführungsform eines Teils einer Innenringeinheit,
Fig. 4 zeigt eine Draufsicht entlang einer radialen Richtung der Innenringeinheit auf einen Teil eines Blechelements der Innenringeinheit aus Figur 3,
Fig. 5 zeigt einen Teilschnitt durch einen Teil einer weiteren alternativen Ausführungsform einer erfindungsgemäßen Wälzlagervorrichtung und
Fig. 6 zeigt einen Ausschnitt aus Fig. 5

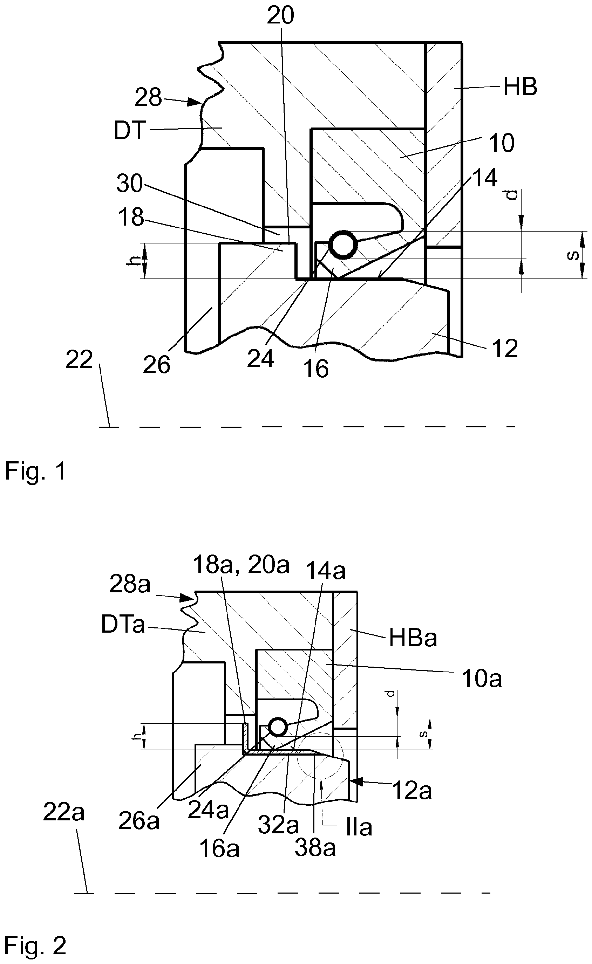

Figur 1 zeigt einen Teilschnitt durch einen Teil einer erfindungsgemäßen Wälzlagervorrichtung. Der Dichtungsträgers DT, das Halteblech HB und die Innenringeinheit 12 sind Teile der Wälzlagervorrichtung. Die Innenringeinheit 12 weist einen Innenring 26 und einen Teilbereich auf, welcher einstückig mit dem Innenring ausgebildet ist und eine Fläche 14 aufweist. Die Fläche 14 hat die Form eines Zylindermantels. Ein Teil 16 einer Dichtungseinheit 10 der Wälzlagervorrichtung, welcher als Dichtlippe ausgebildet ist, liegt an der Fläche 14 an und gleitet bei einem Betriebsvorgang, bei welchem sich der Innenring relativ zu einem Außenring (nicht dargestellt) der Wälzlagervorrichtung um eine Drehachse 22 der Wälzlagervorrichtung dreht, an der Fläche 14.

Ausgehend von der Fläche 14 weist der Innenring in Radialrichtung in Bezug auf die Drehachse 22 eine als Absatz ausgebildete Erhebung 18 auf. Ein Bereich 20 der Erhebung 18 weist einen größeren Abstand von der Drehachse 22 auf als die Fläche 14.

Ferner weist die Wälzlagervorrichtung ein Federelement 24 auf, das als Spiralfeder ausgebildet ist und die Dichtlippe entlang eines Kreises, dessen Mittelpunkt auf der Drehachse 22 liegt, gegen die Fläche 14 drückt. Der Bereich 20 weist einen Abstand von der Drehachse 22 auf, welcher größer ist als der Abstand des Federelements von der Drehachse.

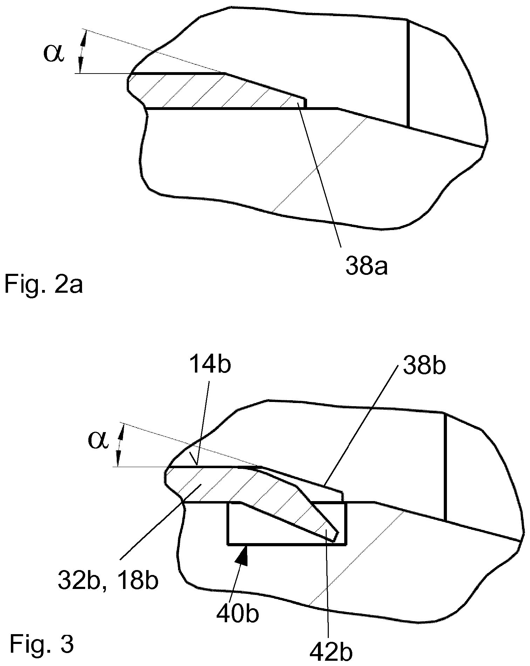

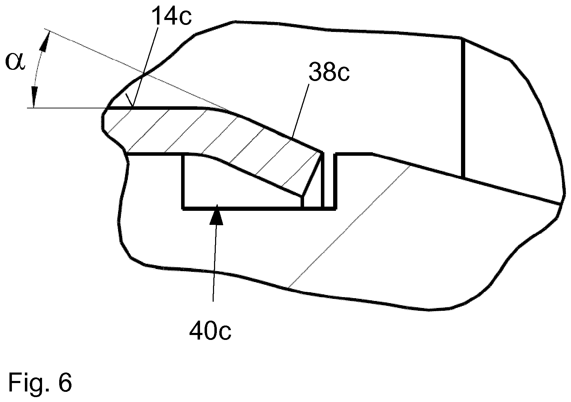

Außerdem weist die Wälzlagervorrichtung eine Außenringeinheit 28 auf, welche dem Dichtungsträger DT umfasst. Der Dichtungsträger bildet zusammen mit Erhebung 18 der Innenringeinheit 12 einen Ringsspalt 30. Eine maximale radiale Erstreckungslänge des Spalts 30 ist kleiner als die Hälfte einer maximalen Erstreckungslänge d des Federelements 24 in einem Querschnitt in einem entspannten Zustand. Die Dichtungseinheit ist durch das Halteblech an dem Dichtungsträger befestigt. Prinzipiell kann der Bereich 20 ausgehend von der Fläche 14 eine Höhe h aufweisen, wobei gilt h größer gleich s-d und h kleiner gleich s+d. Die Höhe s ist die radiale Höhe eines radial äußeren Bereichs des Federelements - gemessen ausgehend von der Fläche 14. Insbesondere kann h=s sein. In den Figuren 2 bis 6 sind alternative Ausführungsbeispiele dargestellt. Im Wesentlichen gleich bleibende Bauteile, Merkmale und Funktionen sind grundsätzlich mit den gleichen Bezugszeichen beziffert. Zur Unterscheidung der Ausführungsbeispiele sind jedoch den Bezugszeichen der Ausführungsbeispiele in den Fig. 2-6 die Buchstaben "a", "b" usw. hinzugefügt. Ausnahmen bilden hier der Übersichtlichkeit halber die Bezugszeichen "d", "h", "s" und α. Die nachfolgende Beschreibung beschränkt sich im Wesentlichen auf die Unterschiede zu dem Ausführungsbeispiel in Fig. 1, wobei bezüglich gleich bleibender Bauteile, Merkmale und Funktionen auf die Beschreibung des Ausführungsbeispiels in Fig. 1 verwiesen werden kann.

Fig. 2 zeigt einen Teilschnitt durch einen Teil einer alternativen Ausführungsform einer erfindungsgemäßen Wälzlagervorrichtung. Eine Erhebung 18a einer Innenringeinheit 12a ist durch einen Teil eines Blechelements 32a der Innenringeinheit 12a gebildet. Eine Fläche 14a der Innenringeinheit, an welcher eine Dichtung Einheit 10a der Wälzlagervorrichtung bei einem Betriebsvorgang gleitet, ist eine Oberfläche des Blechelements 32a. Zwischen dem Blechelement 32a, welches an einem Innenring 26a der Innenringeinheit befestigt ist, und dem Innenring kann ein in einer Nut des Innenrings angeordneter Dichtring vorgesehen sein, welcher ein Auslaufen von Schmierstoff verhindert. Das Blechelement ist mit Übermaß auf dem Innenring gepresst. Ein Absatz des Innenrings legt das Blechelement in Bezug auf die axiale Richtung fest. Das Blechelement besteht aus korrosionsbeständigem Stahl. Alternativ kann das Blechelement aus Stahlblech mit korrosionsschützendem Überzug aus Zink, Chrom oder einer keramischen Schicht bestehen. Das Blechelement weist eine Härte von mehr als 45 HRC auf. Zusätzlich kann das Blechelement mit Dichtlack oder einem dichtenden Klebstoff beschichtet sein, wodurch eine Leckage entlang der radialen Innenseite des Blechelements verhindert wird. Hierbei sichert der Klebstoff das Blech gegen Wandern und Abrutschen durch Lagerverformungen. Das Blechelement 32a weist einen Teilbereich auf, der in Bezug auf die axiale Richtung der Innenringeinheit 12a an einem Ende des Blechelements 32a angeordnet ist. Unmittelbar an dem Teilbereich weist das Blechelement eine Fase 38a auf. Die Phase ist durch eine Schrägfläche gebildet, welche eine in einer Schnittebene, welche durch die axiale Richtung der Innenringeinheit und einer Radialrichtung gebildet ist, verlaufende Flächenerstreckungsrichtung aufweist, die schräg zu der Drehachse 22 verläuft und mit dieser einen Winkel α einschließt, der 15° beträgt. Alternativ kann dieser Winkel zwischen 10 und 30° liegen. Die Fase entspricht der Auffädelfase am Innenring und verhindert eine Beschädigung der Dichtungseinheit 10a bei deren Montage.

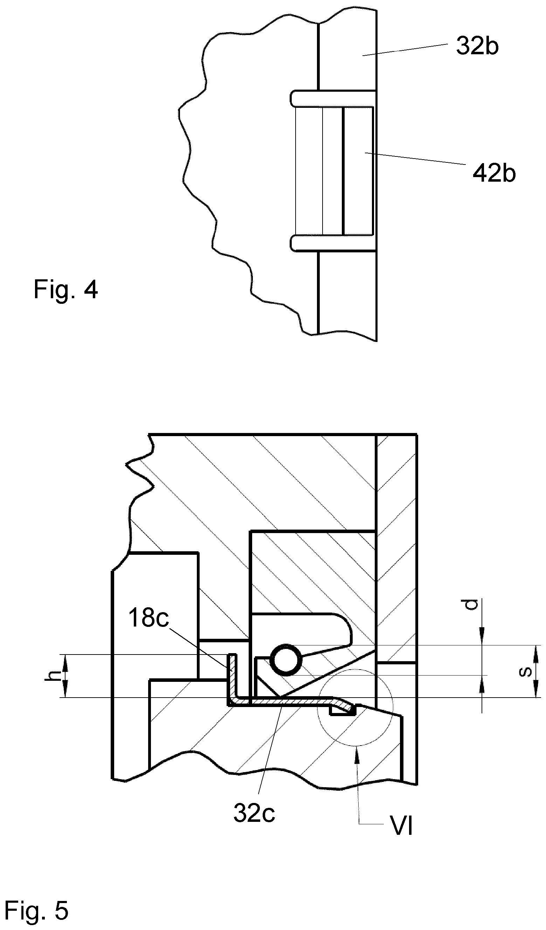

Figur 3 zeigt einen Schnitt durch eine alternative Ausführungsform eines Teils einer Innenringeinheit mit einem Blechelement 32b. Ein Teilbereich des Blechelements 32b ist an einem axialen Ende des Blechelements angeordnet. Ein Teil 42b des Teilbereichs ragt in eine Nut 40b der Innenringeinheit und ist - in einer Draufsicht entgegen einer radialen Richtung der Innenringeinheit - zungenförmig ausgebildet (Fig. 4). Durch das Einragen in die Nut wird ein axiales Abgleiten des Blechelements, welches ansonsten doch Wanderbewegungen bei dynamischer Verformung der Wälzlagervorrichtung erfolgen könnte, von dem Innenring verhindert. Der Teil 42b ist in radialen Richtung nach innen abgewinkelt und bildet dadurch eine Fase. Der Teil 42b kann wahlweise vor der Montage eingebogen werden, so dass eine Schnappmontage erfolgen kann, oder nach Aufschieben des Blechelements durch geringere Aufpresskräfte eingebogen werden. Ferner weist das Blechelement an einem axialen Endbereich eine Fase 38b auf.

Figur 5 zeigt eine weitere alternative Ausführungsform eines Teils einer Innenringeinheit. Ein Teilbereich eines Blechelements 32c der Innenringeinheit, welcher an einem axialen Ende des Blechelements angeordnet ist, ist entlang seines gesamten Umfangs, welcher die Drehachse 22 umgibt, unterbrechungsfrei ausgebildet und in radialer Richtung nach innen abgewinkelt und greift entlang des gesamten Umfangs in eine Nut 40c der Innenringeinheit ein. Durch die Abwinkelung, die durch Biegen erreicht wird, ist eine Fase 38c gebildet. Dieses Ausführungsbeispiel erlaubt eine kostengünstige Herstellung, wobei die Fase nicht durch einen Prägevorgang oder einen spahnabhebenden Vorgang erzeugt werden muss.

### Bezugszeichenliste

| | |
|---|---|
| DT | Dichtungsträger |
| HB | Halteblech |
| h | Höhe |
| s | Höhe |
| d | Durchmesser |
| α | Winkel |
| 10 | Dichtungseinheit |
| 12 | Innenringeinheit |
| 14 | Fläche |
| 16 | Teil |
| 18 | Erhebung |
| 20 | Bereich |
| 22 | Drehachse |
| 24 | Federelement |
| 26 | Innenring |
| 30 | Spalt |
| 32 | Blechelement |
| 38 | Fase |
| 40 | Nut |
| 42 | Teil |

## Patentansprüche

1. Wälzlagervorrichtung mit wenigstens einer Dichtungseinheit (10) und zumindest einer Innenringeinheit (12), welche wenigstens eine Fläche (14) aufweist, an welcher wenigstens ein Teil (16) der Dichtungseinheit (10) in zumindest einem Betriebszustand gleitet,
wobei die Innenringeinheit (12) wenigstens eine Erhebung (18) mit einem Bereich (20) aufweist, welcher einen größeren Abstand von einer Drehachse (22) der Wälzlagervorrichtung aufweist als die Fläche (14);
wobei die Wälzlagervorrichtung wenigstens ein Federelement (24) aufweist, welches den Teil (16) der Dichtungseinheit (10) auf die Fläche (14) drückt, und wobei der Bereich (20) einen Abstand von der Drehachse (22) aufweist, der größer oder gleich groß ist wie der Abstand des Federelements (24) von der Drehachse (22),
**dadurch gekennzeichnet, dass**
die Wälzlagervorrichtung wenigstens eine Außenringeinheit (28) aufweist,
die einen Dichtungsträger (DT) und ein Halteblech (HB) umfasst, wobei der Dichtungsträger (DT) wenigstens einen Spalt (30) mit der Erhebung (18) der Innenringeinheit (12), bildet, und wobei eine maximale radiale Erstreckungslänge des Spalts (30) höchstens so groß ist wie eine maximale Erstreckungslänge (d) des Federelements (24) in einem Querschnitt in einem entspannten Zustand..

2. Wälzlagervorrichtung nach Anspruch 1, wobei der Bereich (20) einen Abstand von der Drehachse (22) aufweist, der höchsten so groß ist wie das Maximum der Abstände, die die Punkte des Federelements (24) von der Drehachse (22) aufweisen.

3. Wälzlagervorrichtung nach Anspruch 1 oder 2, wobei die Erhebung (18) von einem Absatz eines Innenrings (26) der Innenringeinheit (12) gebildet ist.

4. Wälzlagervorrichtung nach einem der vorherigen Ansprüche, wobei die Erhebung (18) durch zumindest einen Teil eines Blechelements (32) der Innenringeinheit (12) gebildet ist.

5. Wälzlagervorrichtung nach einem der vorherigen Ansprüche, wobei die Fläche (14) eine Oberfläche eines Blechelements (32) der Innenringeinheit (12) ist.

6. Wälzlagervorrichtung nach Anspruch 5, wobei die Innenringeinheit (12) einen Dichtring aufweist, welcher zwischen dem Blechelement (32) und einem weiteren Bauteil (26) der Innenringeinheit (12) angeordnet ist.

7. Wälzlagervorrichtung nach einem der Ansprüche 5 oder 6, wobei das Blechelement (32) an einem Teilbereich, welcher in Bezug auf die axiale Richtung der Innenringeinheit (12) an einem Ende des Blechelements (32) angeordnet ist, eine Fase (38) aufweist.

8. Wälzlagervorrichtung nach einem der Ansprüche 5 bis 7, wobei ein Teilbereich des Blechelements (32), welcher in Bezug auf die axiale Richtung der Innenringeinheit (12) an einem Ende des Blechelements (32) angeordnet ist, in eine Nut (40) der Innenringeinheit ragt.

9. Wälzlagervorrichtung nach Anspruch 8, wobei zumindest ein Teil (42) des Teilbereichs zungenförmig ausgebildet ist.

## Claims

1. Rolling-bearing device having at least one seal unit (10) and having at least one inner-ring unit (12) which has at least one area (14) on which at least a part (16) of the seal unit (10) slides in at least one operating state, wherein
the inner-ring unit (12) has at least one elevation (18) with a region (20) that is at a greater distance from the axis of rotation (22) of the rolling-bearing device than the area (14);
wherein the rolling-bearing device has at least one spring element (24) which pushes the part (16) of the seal unit (10) onto the area (14),
and wherein the region (20) is at a distance from the axis of rotation (22) that is greater than or equal to the distance of the spring element (24) from the axis of rotation (22),
**characterized in that**
the rolling-bearing device has at least one outer-ring unit (28) comprising a seal carrier (DT) and comprising a holding plate (HB), wherein the seal carrier (DT) forms at least one gap (30) with the elevation (18) of the inner-ring unit (12), and wherein a maximum radial extent length of the gap (30) is at most as large as a maximum extent length (d) of the spring element (24) in cross section in a relaxed state.

2. Rolling-bearing device according to Claim 1, wherein the region (20) is at a distance from the axis of rotation (22) that is at most as large as the maximum of the distances at which the points of the spring element (24) are from the axis of rotation (22).

3. Rolling-bearing device according to Claim 1 or 2, wherein the elevation (18) is formed by a shoulder of an inner ring (26) of the inner-ring unit (12).

4. Rolling-bearing device according to one of the preceding claims, wherein the elevation (18) is formed by at least a part of a sheet-metal element (32) of the inner-ring unit (12).

5. Rolling-bearing device according to one of the preceding claims, wherein the area (14) is a surface of a sheet-metal element (32) of the inner-ring unit (12) .

6. Rolling-bearing device according to Claim 5, wherein the inner-ring unit (12) has a sealing ring which is arranged between the sheet-metal element (32) and a further component (26) of the inner-ring unit (12) .

7. Rolling-bearing device according to either of Claims 5 and 6, wherein the sheet-metal element (32) has a bevel (38) on a sub-region which, in relation to the axial direction of the inner-ring unit (12), is arranged at one end of the sheet-metal element (32).

8. Rolling-bearing device according to one of Claims 5 to 7, wherein a sub-region of the sheet-metal element (32) that, in relation to the axial direction of the inner-ring unit (12), is arranged at one end of the sheet-metal element (32) projects into a groove (40) of the inner-ring unit.

9. Rolling-bearing device according to Claim 8, wherein at least a part (42) of the sub-region is of tongue-like form.

## Revendications

1. Dispositif de palier à roulement avec au moins une unité d'étanchéité (10) et au moins une unité de bague intérieure (12) qui présente au moins une surface (14) sur laquelle au moins une partie (16) de l'unité d'étanchéité (10) glisse dans au moins un état de fonctionnement,
l'unité de bague intérieure (12) présentant au moins un bossage (18) avec une zone (20) qui présente une plus grande distance par rapport à un axe de rotation (22) du dispositif de palier à roulement que la surface (14) ; le dispositif de palier à roulement présentant au moins un élément à ressort (24) qui presse la partie (16) de l'unité d'étanchéité (10) sur la surface (14), et la zone (20) présentant une distance par rapport à l'axe de rotation (22) qui est supérieure ou égale à la distance de l'élément à ressort (24) par rapport à l'axe de rotation (22),
**caractérisé en ce que**
le dispositif de palier à roulement présente au moins une unité de bague extérieure (28), qui comprend un support d'étanchéité (DT) et une tôle de retenue (HB), le support d'étanchéité (DT) formant au moins un interstice (30) avec le bossage (18) de l'unité de bague intérieure (12), et une longueur d'extension radiale maximale de l'interstice (30) étant au plus aussi grande qu'une longueur d'extension maximale (d) de l'élément à ressort (24) dans une section transversale dans un état détendu.

2. Dispositif de palier à roulement selon la revendication 1, dans lequel la zone (20) présente une distance par rapport à l'axe de rotation (22) qui est au maximum aussi grande que le maximum des distances que présentent les points de l'élément à ressort (24) par rapport à l'axe de rotation (22).

3. Dispositif de palier à roulement selon la revendication 1 ou 2, dans lequel le bossage (18) est formé par un épaulement d'une bague intérieure (26) de l'unité de bague intérieure (12).

4. Dispositif de palier à roulement selon l'une quelconque des revendications précédentes, dans lequel le bossage (18) est formé par au moins une partie d'un élément en tôle (32) de l'unité de bague intérieure (12).

5. Dispositif de palier à roulement selon l'une quelconque des revendications précédentes, dans lequel la surface (14) est une surface d'un élément en tôle (32) de l'unité de bague intérieure (12).

6. Dispositif de palier à roulement selon la revendication 5, dans lequel l'unité de bague intérieure (12) présente une bague d'étanchéité agencée entre l'élément en tôle (32) et un autre composant (26) de l'unité de bague intérieure (12).

7. Dispositif de palier à roulement selon l'une quelconque des revendications 5 ou 6, dans lequel l'élément en tôle (32) présente un chanfrein (38) sur une zone partielle agencée à une extrémité de l'élément en tôle (32) par rapport à la direction axiale de l'unité de bague intérieure (12).

8. Dispositif de palier à roulement selon l'une quelconque des revendications 5 à 7, dans lequel une zone partielle de l'élément en tôle (32) agencée à une extrémité de l'élément en tôle (32) par rapport à la direction axiale de l'unité de bague intérieure (12) fait saillie dans une rainure (40) de l'unité de bague intérieure.

9. Dispositif de palier à roulement selon la revendication 8, dans lequel au moins une partie (42) de la zone partielle est réalisée sous forme de languette.
